# EUROPÄISCHE PATENTSCHRIFT

(11) **EP 0 591 768 B1**
(45) Veröffentlichungstag und Bekanntmachung des Hinweises auf die Patenterteilung: **23.04.1997**
(21) Anmeldenummer: 93115265.6
(22) Anmeldetag: 22.09.1993
(51) Int. Cl.: C08G 65/32, C07F 9/09, A01N 25/04, C09K 19/40

(54) **Neue Tenside, Verfahren zu ihrer Herstellung, diese enthaltende Mittel und ihre Verwendung**
New sunfactants, process for their preparation, formulations thereof and their application
Agents tensoactifs, nouveaux, leur préparation, formulations les contentant et leur utilisation

(30) Priorität: 03.10.1992 DE 4233309
(43) Veröffentlichungstag der Anmeldung: 13.04.1994
(73) Patentinhaber: HOECHST AKTIENGESELLSCHAFT, 65929 Frankfurt am Main (DE)
(72) Erfinder: Frisch, Gerhard, Dr., D-61273 Wehrheim/Taunus (DE); Maier, Thomas, Dr., D-60529 Frankfurt/Main (DE)

(56) Entgegenhaltungen:
- EP-A- 0 281 043
- FR-A- 1 258 976
- GB-A- 2 183 653
- DATABASE WPI, Derwent Publications Ltd., London (GB); AN 72-60932t (38)

## Beschreibung

Zum Emulgieren von Lösungsmitteln organischer Natur wurden bekanntermaßen unter anderem Tenside genommen, die ein oder mehrere Ethylenoxidgruppen (EO) und/oder Propylenoxidgruppen (PrO) enthalten. Solche Tenside sind beispielsweise n-(C₁-C₁₈)-Alkylphenole, die 1-50 EO-Gruppen enthalten und mono-, di- oder trisubstituiert sein können (z.B. ®Arkopal bzw. ®Sapogenat-Reihe; Hoe S 2435, (Hoechst AG)). Ebenso kann der Phenolrest mono-, di- oder triarylsubstituiert sein und ebenfalls 1-50 EO-Gruppen enthalten (z. B. Hoe 3474, (Hoechst AG); ®Soprophor BSU, ®Soprophor DS-Reihe (Rhone Poulenc) oder solche, wie sie z.B. in der EP-A-0062181, EP-A-0297207, EP-A-0196463, EP-A-0107009 beschrieben werden). Weiterhin kommen in Frage: primäre, sekundäre und tertiäre Alkohole, die eine oder mehrere EO- und/oder PrO-Gruppen enthalten, mit einer Kettenlänge C₆-C₂₄ (verzweigt oder unverzweigt), wie beispielsweise Oleylalkohole, Stearylalkohole, Talgfettalkohole, Cocosfettalkohole, Isotridecylalkohole, Guerbet-Alkohole (z.B. Marken von ®Genapol (Hoechst AG) C, O, S, T, X, ZL, ZDM und SE). Auch eignen sich natürliche Öle, wie Rizinusöl, die ethoxyliert und/oder propoxyliert sein können (z.B. ®Emulsogen-Reihe (Hoechst AG) zum Emulgieren von organischen Lösungsmitteln in Wasser, wobei die Lösungsmittel noch Wirkstoffe enthalten können, die agrochemischer pharmazeutischer und/oder veterinärmedizinischer Natur sein können.

Auch mit Blockpolymeren auf Basis EO/PrO lassen sich gute Emulgiereigenschaften erzielen. Als Beispiele sind zu nennen: Hoe S 3510, Hoe S 1816, Hoechst AG, die ®Pluriol und ®Pluronic-Reihen von BASF.

R-O-(EO)ₓ-(PrO)_{y}-(EO)_{z}-H

mit
- R: (C₁ - C₁₀)-Alkyl bzw. H
x = 4 - 80
y = 4 - 50
z = 4 - 80

Bei den genannten Tensiden handelt es sich um nichtionische Tenside, deren Eigenschaften sich ändern lassen, wenn man die freie(n) entständige(n) OH-Gruppe(n) beispielsweise sulfatiert oder phosphatiert. Für die Phosphatierung kommen verschiedene bekannte Verfahren in Frage wie beispielsweise Naßphosphatierung mit H₃PO₄, Phosphatierung mit Polyphosphorsäure oder Umsetzen mit P₂O₅. Je nach Verfahrensvariante und Menge an eingesetzter Phosphorverbindung erhält man dann Mono-, Di- und Triester. Von besonderem Interesse sind im vorliegenden Falle die Mono- und Diester, speziell die Monoester, die als solche oder in neutralisierter Form, z.B. als Triethanolamin oder K-Salz im Handel erhältlich sind (z.B. ®Soprophor 3 D 33, ®Soprophor FL (Rhone Poulenc); Hoe S 3475, Hoe S 3618, Hoe S 3775 (Hoechst AG)).

T. Suzuki et al. beschreiben ein Verfahren (J. Colloid and Interfac. Sci. 129, No. 2, [1989], 491 ff), bei welchem sie Monohexyldecylalkohol phosphatieren und ein Monohexadecylphosphat erhalten, welches sie mit Arginin unter Bildung von Monoarginin-hexadecylphosphat umsetzen. Die Autoren benutzen diese Verbindung zur Stabilisierung von O/W-Emulsionen, wobei diese in Form von Flüssigkristallen vorliegt (LC -Formation). Die dabei gebildeten gelartigen Emulsionen werden für Kosmetika verwendet.

Es wurde nun überraschenderweise gefunden, wenn man die zuvor beschriebenen ethoxylierten und/oder propoxylierten und anschließend phosphatierten Tenside mit Aminosäuren vorzugsweise basischen Aminosäuren oder deren Salzen, wie z.B. Tryptophan, Arginin, Lysin, Histidin, 2,4-Diaminobuttersäure-Hydrochlorid und Ornithin-Monohydrochlorid umsetzt, daß man Tenside erhält, die flüssigkristalline Eigenschaften zeigen.

Die Erfindung betrifft daher Verbindungen der Formel I 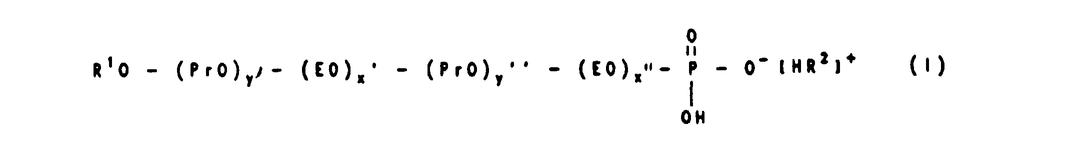 in welcher
- R¹: Wasserstoff,
einem gegebenenfalls substituierten aliphatischen Rest mit bis zu 30 C-Atomen,
einem gegebenfalls substituierten alicyclischen Rest mit bis zu 30 C-Atomen, einem gegebenenfalls substituierten aromatischen Rest mit bis zu 24 C-Atomen oder
einem gegebenenfalls substituierten heteroaromatischen Rest mit bis zu 20 C-Atomen bedeutet,
- R²: für eine Aminosäure steht,
- x' =: 0 - 80 ist,
- y' =: 0 - 50 ist,
- x" =: 0 - 80 ist und
- y" =: 0 - 50 ist,
wobei mindestens eine der Variablen x', y', x" und y" größer als 0 ist.

Bevorzugt sind solche Verbindungen der Formel I, in welcher
- R': Wasserstoff,
(C₁-C₂₄)-Alkyl, das gegebenenfalls substituiert und/oder gegebenenfalls
ungesättigt ist,
(C₁C₂₄)-Alkanoyl, das gegebenenfalls substituiert und/oder gegebenenfalls
ungesättigt ist, oder
(C₆-C₁₂)-Aryl, das gegebenenfalls substituiert ist,
bedeutet und
R², x', y', x" und y" wie oben definiert sind,
insbesondere solche Verbindungen der Formel I, in welcher
- R¹: Wasserstoff,
(C₁-C₂₄)-Alkyl,
Ricinolyl oder
Phenyl, das mit 1, 2 oder 3 gleichen oder verschiedenen Resten aus der
Gruppe (C₁-C₁₆)-Alkyl und (C₆-C₁₂)-Aryl substituiert ist, bedeutet,
- R²: für eine basische Aminosäure steht und
x', y', x'' und y'' wie oben definiert sind.
Ganz besonders bevorzugt sind Verbindungen der Formel I, in welcher
- R¹: Wasserstoff,
(C₁-C₂₄)-Alkyl,
Ricinolyl,
Mono-, Di- oder Tri-(C₁-C₁₆)-alkylphenyl oder
Mono-, Di- oder Tri-(C₆-C₁₂)-arylphenyl bedeutet
und R², x', y', x'' und y'' wie oben definiert sind.
Falls x'' = 0 ist, dann ist x' vorzugsweise größer als 0.

Alkyl ist vorzugsweise unverzweigt. Entsprechendes gilt für davon abgeleitete Reste.

Unter Aryl versteht man vorzugsweise Phenyl, Naphthyl oder Biphenyl, oder, als Substituent an Aryl, auch Styryl.
Von den Aminosäuren sind insbesondere die basischen Aminosäuren, wie Lysin, δ-Hydroxy-Lysin, Arginin, Tryptophan, Histidin, Ornithin oder 2,4-Diaminobuttersäure, oder deren Homologen bevorzugt. Falls die Aminosäuren Chiralitätszentren aufweisen, so können sie als optisch reine Verbindungen in der L- oder der D-Form, vorzugsweise der L-Form, aber auch in Form von Stereoisomerengemischen, wie Racematen vorliegen.

Die Verbindungen der Formel I können beispielsweise durch Umsetzen der entsprechenden Dihydrogenphosphate mit den jeweiligen Aminosäuren z.B. in C₁-C₄-Alkoholen wie Methanol bzw. einem Keton wie Aceton hergestellt werden. Sie werden dann in Wasser aufgenommen und für 120 - 150 min unter leichtem Rühren bei 70 - 75°C gehalten. Nach Abkühlen fällt dann ein wachsartiges Produkt aus, welches wieder in Methanol oder Aceton aufgenommen und anschließend gefiltert wurde (2-malige Wiederholung). Es resultierten nach Abdampfen des Methanols bzw. Acetons wachsartige Produkte, die bräunlich bis gelblich sein können, je nach eingesetzter Aminosäure und die beispielsweise in den nachfolgend beschriebenen Emulsionen bzw. Suspoemulsionen eingesetzt werden können.

Bei den Produkten handelt es sich in der Tat um solche, die überraschenderweise flüssigkristalline Eigenschaften zeigen. Dies war nicht vorhersehbar, da weder die unphosphatierten noch die phosphatierten Produkte allein oder in Form beispielsweise ihrer Ammonium, Kalium oder Triethanolaminverbindungen diesen Effekt nicht auch nur andeutungsweise zeigen. Das flüssigkristalline Verhalten läßt sich z.B. in 1 %iger Lösung beispielsweise in aromatischen Lösungsmitteln wie Xylol, Toluol, Solvesso® 200 bei Verdünnung 2 : 1 mit Wasser zeigen, wenn man diese im Mikroskop in polarisiertem Licht betrachtet. Hier können deutlich die wie 4blättrige Kleeblätter (Sphaerolithe) aussehenden Flüssigkristalle (laminare Phase) erkannt werden. Dies ist ein Beweis für die Existenz der Flüssigkristalle.

Diese flüssigkristallinen Produkte lassen sich z.B. als Tenside zur Emulgierung von organischen Lösungsmitteln, vorzugsweise Aromaten, in Wasser einsetzen.

Hierbei können in den organischen Lösungsmitteln biologisch aktive Substanzen, vorzugsweise agrochemische, pharmazeutische oder auch veterinärmedizinische Wirkstoffe gelöst sein, die mit 0,1 - 10 %, vorzugsweise jedoch 0,5 - 5 % der hier beschriebenen Tenside versetzt werden. Der Anteil der organischen Phase kann zwischen 0,1 und 85 % liegen, vorzugsweise jedoch 1 - 60 % betragen.

Die Wirkstoffe werden aus der Reihe der Herbizide, Insektizide, Fungizide, Arkarizide, Nematizide, Pheromone und Repellents, vorzugsweise aus der Reihe der Herbizide und Insektizide ausgewählt. Die Formulierungen enthalten gegebenenfalls mindestens einen Safener.

Bei den Herbiziden kommen insbesondere blattwirksame Herbizide in Frage, die ihr biologisches Potential vornehmlich oder besser in gelöster Form entfalten, jedoch als Festformulierungen zum Einsatz kommen sollen. Geeignete herbizide Wirkstoffe sind beispielsweise Phenoxyphenoxy- oder Heteroaryloxyphenoxypropionsäurealkylester wie α-4-(2',4'-Dichlorphenoxy)phenoxy-propionsäuremethylester [common name: Diclofopmethyl] (A), Ethyl-2-[4-(6-chlor-2-benzthiazolyoxy)phenoxy]-propionat (B) oder Ethyl-2-[4-(6-chlor-2-benzoxazolyloxy)phenoxy)-propionat(common name: Fenoxaprop-P-ethyl) (C), Dinitroanilinverbindung wie 2,6-Dinitro-4-trifluormethyl-N,N-dipropylanilin [common name: Trifluralin] (D) oder 2,6-Dinitro-4-isopropyl-N,N-dipropylanilin [common name: Isopropalin] (E), Hydroxybenzonitrilderivate wie 2,6-Dibrom-4-hydroxybenzonitriloctanoat (F), Dinitrophenolverbindungen wie 2-sec.Butyl-4,6-dinitrophenol [common name: Dinoterb] (G).

Als Safener sind beispielsweise die in EP-A-86750, EP-A-191736, EP-A-346620, EP-A-333131, EP-A-269806, EP-A-159290, DE-A-2546845, PCT/EP-90/02020 und PCT/EP-90/01966 beschriebenen Verbindungen geeignet.

Geeignete Insektizide sind beispielsweise 1,4,5,6,7,7-Hexachlor-8,9,10-trinorborn-5-en-2,3-ylendi-methyl-sulfit [common name: Endosulfan], 2-(1-Methyl-n-propyl)-4,6-dinitrophenyl-2-methylcrotonat[common name: Binapacryl], Phosphorsäureester wie O,O-Diethyl-O-1-phenyl-1H-1,2,4-triazol-3-yl-phosphorthioat [common name: Triazophos] oder Pyrethroide wie (S)-α-Cyano-3-phenoxybenzyl(1R,3R)-3-(2,2-dibromovinyl)-2,2-dimethylcyclopropancarboxylat [common name: Deltamethrin] oder (4-Ethoxyphenyl)-[3-(4-fluor-3-phenoxyphenyl)propyl]-dimethyl-silan (Silafluofen).

Als geeignetes Fungizid ist beispielsweise zu nennen Ethyl-2-diethoxythiophosphoryloxy-5-methyl-pyrazolo[1,5 a]pyrimidin-6-carboxylat [common name: Pyrazophos], ferner als Pheromon die Verbindungen (E)-8-(E)-10-Dodecadienol oder (Z)-7,8-Epoxy-2-methyloctadecan und als Repellent Phthalsäuredimethylester.

Die obengenannten Herbizide (Verbindung (B) ausgenommen), Insektizide sowie das Repellent sind aus H. Martin, Pesticide Manual 6th edition 1979, bekannt. Die Herbizide (B) und (C) sind in DE-A-2640730, die beiden Pheromone in M. Beroza, Chem. Controlling Insect Behaviour, Academic Press, N.Y. 1970, beschrieben.

Dabei ist unter organischer Phase Tensid, Lösungsmittel einschließlich gelöster Stoff(e) zu verstehen. Der gelöste Wirkstoffanteil im Lösungsmittel ist abhängig von dem jeweils gewählten Wirkstoff aufgrund dessen Löslichkeit in dem jeweils gewählten organischen Lösungsmittel.
Als Lösungsmittel kommen alle nicht mit Wasser mischbaren organischen Lösungsmittel in Frage, vorzugsweise jedoch Ketone wie Isophoron, Cyclohexanon, Acetophenon, Methylbenzylketon, Cyclopentanon oder aromatische Kohlenwasserstoffe, vorzugsweise auf Phenyl- und/oder Naphthyl-Basis, die 1-5-fach, vorzugsweise mit Alkyl substituiert sein können oder Phthalsäurediester. Neben dem alleinigen Einsatz vorher beschriebener Tenside können diese untereinander in beliebigen Verhältnis zueinander gemischt werden, vorzugsweise bei 2 Tensiden im Verhältnis 50 : 1 bis 1 : 50. Es können aber auch mehr als 2 Tenside dieser Aminosäurephosphate miteinander zu Kombinationen gemischt werden.
Ebenso können 1 oder mehrere dieser Aminosäurephosphate mit anderen handelsüblichen Tensiden ionischer wie nichtionischer Art gemischt werden, um im jeweiligen Bedarfsfall durch Kombination derselben noch bessere Emulgiereigenschaften zu erhalten. Ein Großteil dieser Tenside wird beschrieben in "McCutchean's Emulsifier & Detergents" National and International Edition 1988 (McCutchean's Division, Glen Rock, N.J. USA).

Gegebenenfalls einzusetzende zusätzliche Dispergiermittel sind vorzugsweise Lignosulfonate, Na-Salze von Dinaphthylmethandisulfonsäuren, das Na-Salz einer Sulfonsäure aus Kresol, Formaldehyd, Na-sulfit und Oxynaphthalinsulfonsäure, das Na-Salz einer Sulfonsäure aus m-Kresol, Formaldehyd und Na-Sulfit, Kondensationsprodukte aus Arylsulfonsäuren und Formaldehyd-Na-Salzen, Triethanolaminsalze von phosphorylierten Polystyrylphenylpolyethylenoxiden, Polyvinylalkohol, dodecylbenzolsulfonsaures Calcium sowie Alkylnaphthalinsulfonate unterschiedlicher Alkylkettenlänge.

Gegebenenfalls einzusetzende zusätzliche Emulgatoren sind nichtionische, anionische oder kationische oberflächenaktive Stoffe, wobei vorwiegend Mischungen von nichtionischen mit anionischen Komponenten verwendet werden. Verwendbar sind aber auch Kombinationen aus nichtionischen und kationischen oberflächenaktiven Mitteln. Zu den bevorzugt eingesetzten Emulgatoren gehören Phenylsulfonat-Calcium, ethoxylierte Nonylphenole, ethoxylierte aliphatische Alkohole, ethoxyliertes Rizinusöl, Fettsäurepolyglykolester, Propylenglykol-Ethylenglykol-Blockpolymerisate sowie Gemische derselben, sowie phosphorylierte Ethylenglykol-propylenglykol-ethylenglykol-Blockpolymerisate.

Diese Aminosäurephosphate zeigen aufgrund ihrer flüssigkristallinen Eigenschaften eine gute Anlagerung an der Grenzfläche Öltröpfchen zur Trägerphase Wasser und schirmen daher gut die Wasser- von der Ölphase ab. Dies ist vor besonderer Bedeutung, wenn in der Ölphase Stoffe gelöst sind, die hydrolyseempfindlich sind. Dies läßt sich an Beispielen von Heptenophos in EW-Formulierung oder an einer Mischung von Amidosulfuron mit Fenoxaprop-P-ethyl als SE (Suspoemulsion) Formulierung zeigen.

### Beispiele: Tabellen A + B

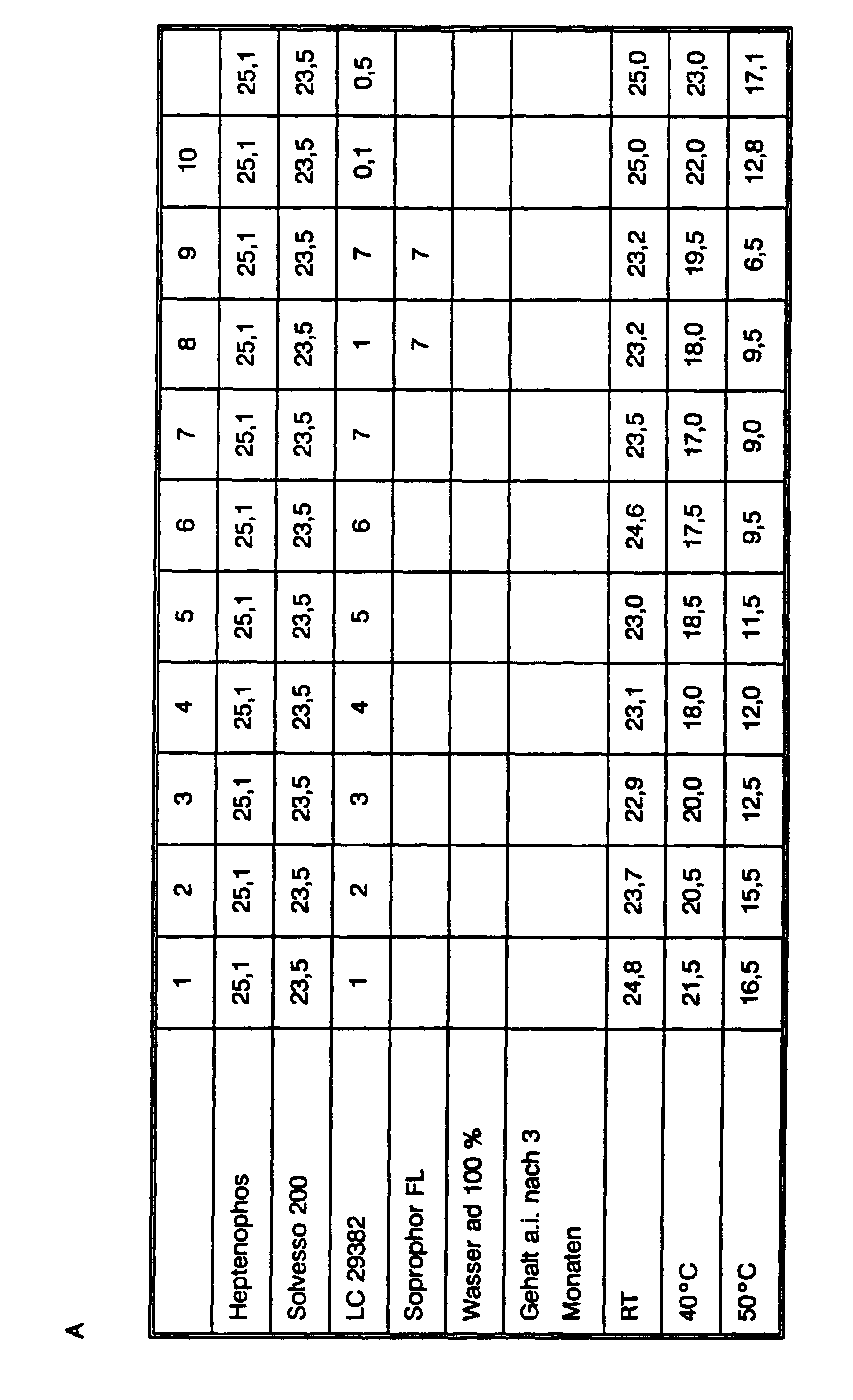

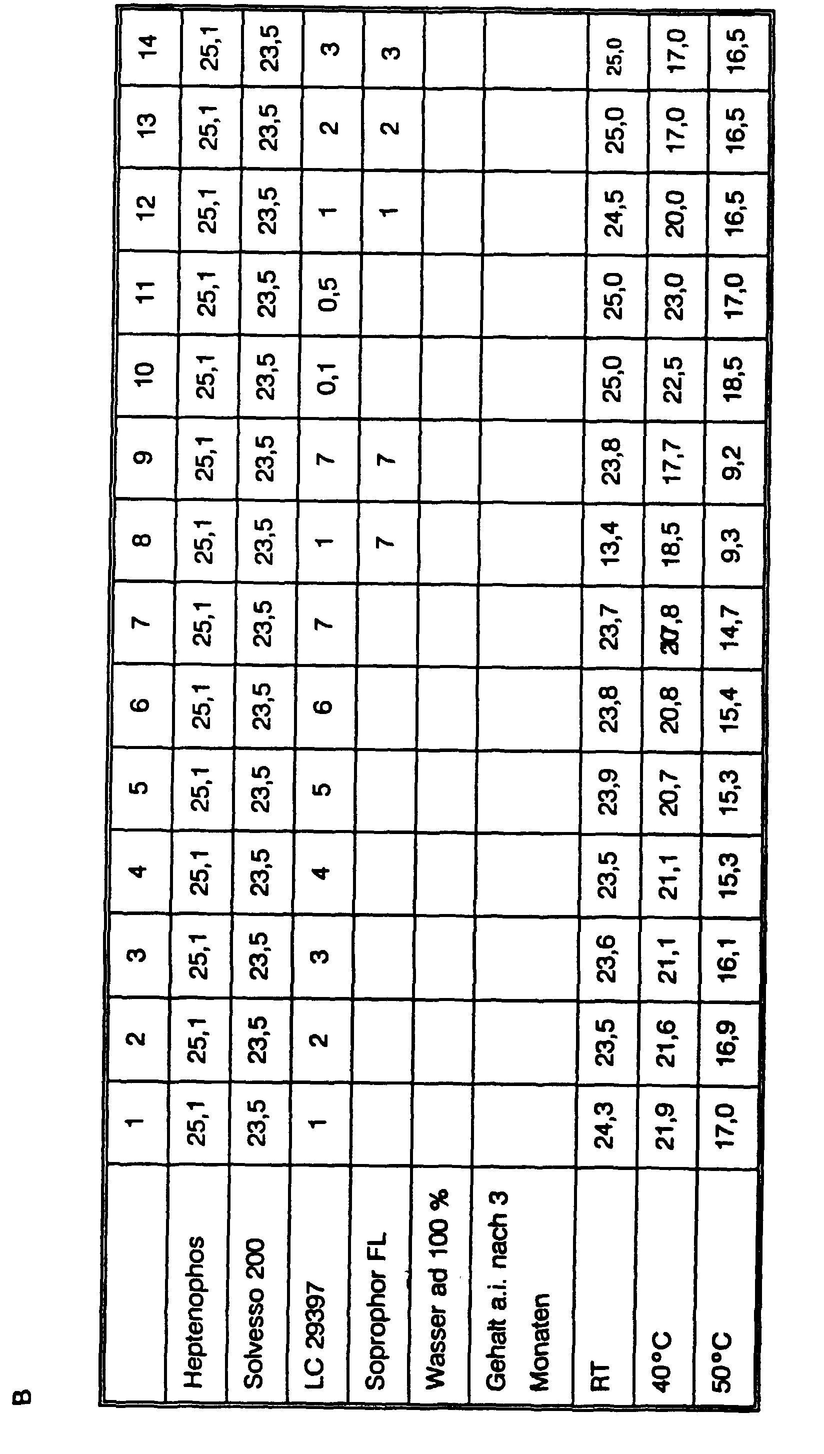

Heptenophos baut unter Normalbedingungen in wäßriger Umgebung innerhalb von Tagen bei RT ab. Es ist auch offensichtlich, daß man mit wenig deutlich mehr erreichen kann. Kombinationen mit anderen Tensiden zeigen eher eine Verschlechterung der Lagereigenschaften. Interessant ist auch das unterschiedliche Verhalten von LC 29382 und LC 29397 bei höheren Konzentrationen.

Im nachfolgenden finden sich Beispiele von Suspoemulsion mit verschiedenen LC's an der Kombination Amidosulfuron und Fenoxaprop-P-ethyl.
Auch hier kann der Abbau von Amidosulfuron in Wasser deutlich vermindert werden. Dies sowohl allein mit LC als Tensid als auch in Kombination mit Soprophor BSU (Tristyrylphenolethoxylat mit ca. 18 EO).
- LC 29382: ist Produkt aus Tristyrylphenol - 18 EO - phosphatiert, mit Arginin kondensiert
- LC 29397: ist Produkt aus EO-PrO-EO (Hoe 3618) phosphatiert, mit Arginin kondensiert
- LC 29490: ist Produkt aus EO-PrO-EO (Hoe 3618) phosphatiert, mit Tryptophan kondensiert
- LC 29491: ist Produkt aus Tristyrylphenol - 18 EO - phosphatiert, mit Tryptophan kondensiert
- LC 29492: ist Produkt aus EO-PrO-EO (Hoe 3618) phosphatiert, mit Lysinmonohydrochlorid kondensiert
- LC 29493: ist Produkt aus Tristyrylphenol - 18 EO - phosphatiert, mit Lysinmonohydrochlorid kondensiert

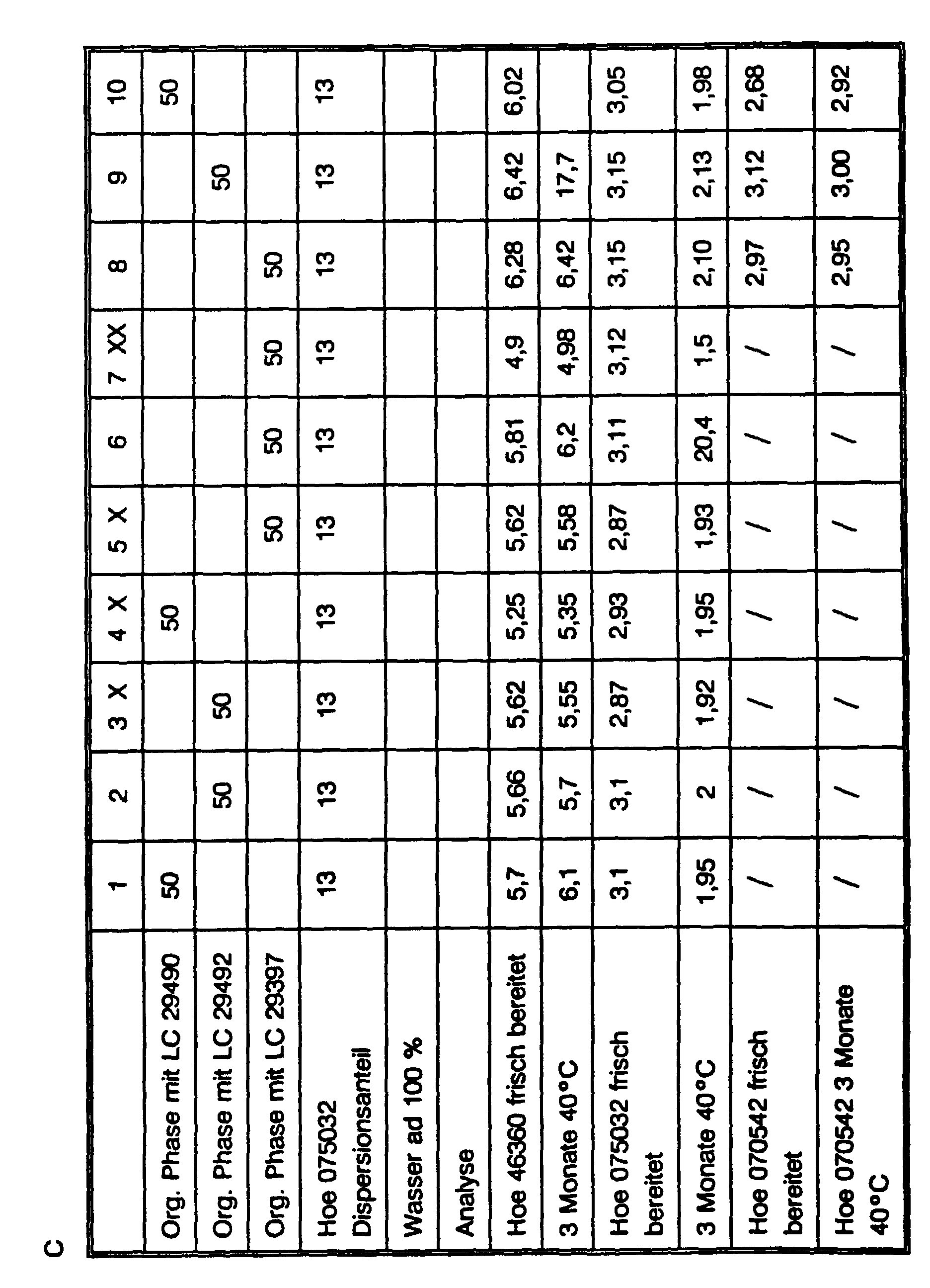

Die in der Tabelle C mit X gekennzeichneten Rezepturen enthalten anstelle ®Soprophor BSU, ®Soprophor FL, die mit XX gekennzeichnete Rezeptur enthält nur ®Soprophor FL, aber keinen LC-Anteil, was sich auch in der deutlich stärkeren Abnahme nach 3 Mon. 40°C bei Hoe 075032 zeigt.

Dem Dispersionsanteil von Amidosulfuron (Hoe 075032) liegt folgende Grundrezeptur (30518) zugrunde:

| | |
|---|---|
| 25,3 % | Amidosulfuron |
| 10,0 % | ®Sokolan CP10 |
| 1,0 % | ®Darvan Nr. 3 |
| 2,0 % | ®Meranil A Pulver |
| 2,0 % | Entschäumer SE 2 |
| 0,2 % | ®Rhodopol 23 |
| 0,1 % | ®Kobate C |
| 8,0 % | Glyzerin |
| 51,4 % | Wasser |

Die organische Phase mit Fenoxaprop-P-ethyl allein oder bei Bedarf mit Fenchlorazol-ethyl hat nachfolgende Zusammensetzung, wobei bei Einsatz von Fenchlorazol-ethyl die entsprechenden w/w % von Solvesso 150-Anteil abgezogen werden. Ebenso kann der entsprechende LC-Anteil durch die anderen beschriebenen LC-Varianten ersetzt oder miteinander kombiniert werden.

| | |
|---|---|
| 13,2 % | Fenoxaprop-P-ethyl |
| 10,0 % | Rapsöl |
| 10,0 % | ®Soprophor BSU |
| 2,0 % | LC 29490 |
| 64,8 % | ®Solvesso 150 |

## Patentansprüche

1. Verbindung der Formel I 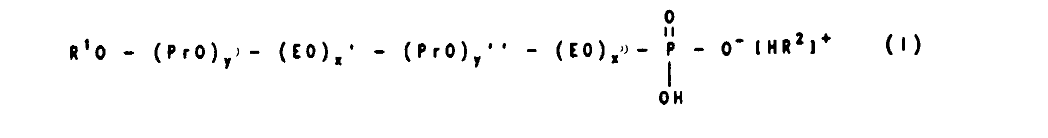 in welcher
R' Wasserstoff,
einem gegebenenfalls substituierten aliphatischen Rest mit bis zu
30 C-Atomen,
einem gegebenfalls substituierten alicyclischen Rest mit bis zu
30 C-Atomen,
einem gegebenenfalls substituierten aromatischen Rest mit bis zu
24 C-Atomen oder
einem gegebenenfalls substituierten heteroaromatischen Rest mit bis zu
20 C-Atomen bedeutet,
R² für eine Aminosäure steht,
x' = 0 - 80 ist,
y' = 0 - 50 ist,
x" = 0 - 80 ist und
y" = 0 - 50 ist,
wobei mindestens eine der Variablen x', y', x" und y" größer als 0 ist.

2. Verbindung der Formel I gemäß Anspruch 1,
in welcher
R¹ Wasserstoff,
(C₁-C₂₄)-Alkyl, das gegebenenfalls substituiert und/oder gegebenenfalls ungesättigt ist,
(C₁-C₂₄)-Alkanoyl, das gegebenenfalls substituiert und/oder gegebenenfalls
ungesättigt ist, oder
(C₆-C₁₂)-Aryl, das gegebenenfalls substituiert ist,
bedeutet und
R², x', y', x'' und y'' wie in Anspruch 1 definiert sind.

3. Verbindung der Formel I gemäß Anspruch 1 oder 2,
in welcher
R¹ Wasserstoff,
(C₁-C₂₄)-Alkyl,
Ricinolyl oder
Phenyl, das mit 1, 2 oder 3 gleichen oder verschiedenen Resten aus der
Gruppe (C₁-C₁₆)-Alkyl und (C₆-C₁₂)-Aryl substituiert ist,
bedeutet,
R² für eine basische Aminosäure steht und
x', y', x'' und y'' wie in Anspruch 1 definiert sind.

4. Verbindung der Formel I gemäß einem der Ansprüche 1 bis 3,
in welcher
R¹ Wasserstoff,
(C₁-C₂₄)-Alkyl,
Ricinolyl,
Mono-, Di- oder Tri-(C₁-C₁₆)-alkylphenyl oder
Mono-, Di- oder Tri-(C₆-C₁₂)-arylphenyl bedeutet
und R², x', y', x'' und y'' wie oben definiert sind.

5. Verbindung der Formel I gemäß einem der Ansprüche 1 bis 4, in welcher x' größer als 0 ist, falls x'' = 0 ist.

6. Verfahren zur Herstellung einer Verbindung der Formel I gemäß einem der Ansprüche 1 bis 5, dadurch gekennzeichnet, daß das entsprechende Dihydrogenphosphat mit der jeweiligen Aminosäure oder deren Salz umgesetzt wird.

7. Mittel auf Wasserbasis, enthaltend mindestens eine Verbindung gemäß einem der Ansprüche 1 bis 5 und ein organisches Lösungsmittel.

8. Verwendung einer Verbindung gemäß einem der Ansprüche 1 bis 5 als Tensid.

9. Pflanzenschutzmittel gemäß Anspruch 7, enthaltend mindestens einen Wirkstoff aus der Reihe der Herbizide, Insektizide, Fungizide, Akarizide, Nematizide, Pheromone und Repellents.

## Claims

1. A compound of the formula I 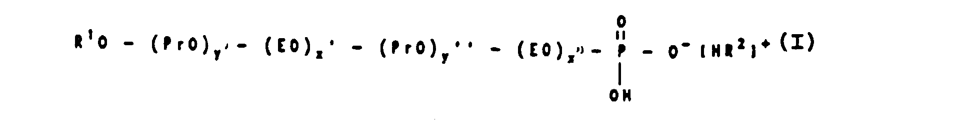 in which
R¹ is hydrogen,
a substituted or unsubstituted aliphatic
radical having up to 30 carbon atoms,
a substituted or unsubstituted alicyclic
radical having up to 30 carbon atoms,
a substituted or unsubstituted aromatic radical
having up to 24 carbon atoms or
a substituted or unsubstituted heteroaromatic
radical having up to 20 carbon atoms,
R² is an amino acid,
x' = 0 - 80,
y' = 0 - 50,
x" = 0 - 80 and
y" = 0 - 50,
with at least one of the variables x', y', x" and y" being greater than 0.

2. A compound of the formula I as claimed in claim 1, in which
R¹ is hydrogen,
(C₁-C₂₄)-alkyl which may be substituted and/or
unsaturated,
(C₁-C₂₄)-alkanoyl which may be substituted and/or unsaturated, or
(C₆-C₁₂)-aryl which may be substituted and
R², x', y', x" and y" are as defined in claim 1.

3. A compound of the formula I as claimed in claim 1 or 2,
in which
R¹ is hydrogen,
(C₁-C₂₄)-alkyl,
ricinolyl or
phenyl which is substituted with 1, 2 or 3
identical or different radicals from the group
consisting of (C₁-C₁₆)-alky and (C₆-C₁₂)-aryl,
R² is a basic amino acid and
x', y', x" and y" are as defined in claim 1.

4. A compound of the formula I as claimed in any one of claims 1 to 3,
in which
R¹ is hydrogen,
C₁-C₂₄)-alkyl,
ricinolyl
mono-, di- or tri-(C₁-C₁₆)-alkylphenyl or
mono-, di- or tri-(C₆-C₁₂)-arylphenyl,
and R², x', y', x" and y" are as defined above.

5. A compound of the formula I as claimed in any one of claims 1 to 4, in which x' is greater than 0 if x" = 0.

6. A process for the preparation of a compound of the formula I as claimed in any one of claims 1 to 5, which comprises reacting the corresponding dihydrogen phosphate with the respective amino acid or salt thereof.

7. A water-based composition, comprising at least one compound as claimed in any one of claims 1 to 5 and an organic solvent.

8. The use of a compound as claimed in any one of claims 1 to 5 as a surfactant.

9. A crop-protection composition as claimed in claim 7, which comprises at least one active substance from the group consisting of herbicides, insecticides, fungicides, acaricides, nematicides, pheromones and repellents.

## Revendications

1. Composé de formule I 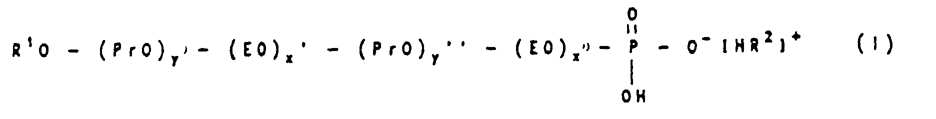 dans lequel
R¹ représente l'hydrogène,
un radical aliphatique comportant jusqu'à
30 atomes de carbone, éventuellement substitué,
un radical alicyclique comportant jusqu'à
30 atomes de carbone, éventuellement substitué,
un radical aromatique comportant jusqu'à 24 atomes
de carbone, éventuellement substitué, ou
un radical hétéroaromatique comportant jusqu'à
20 atomes de carbone, éventuellement substitué,
R² représente un acide aminé
x' = 0-80,
y' = 0-50,
x" = 0-80, et
y" = 0-50,
au moins l'une des variables x', y', x" et y" étant supérieure à 0.

2. Composé de formule I selon la revendication 1 dans lequel
R¹ représente l'hydrogène,
alkyle en C₁-C₂₄ qui est éventuellement substitué
et/ou éventuellement insaturé,
alcanoyle en C₁-C₂₄ qui est éventuellement
substitué et/ou éventuellement insaturé, ou
aryle en C₆-C₁₂ qui est éventuellement substitué, et
R², x', y', x" et y" sont définis dans la revendication 1.

3. Composé de formule I selon la revendication 1 ou 2 dans lequel
R¹ représente l'hydrogène,
alkyle en C₁-C₂₄,
ricinolyle ou
phényle, qui est substitué par 1, 2 ou 3 radicaux
identiques ou différents pris dans le groupe comportant alkyle en C₁-C₁₆ et aryle en C₆-C₁₂,
R² représente un acide aminé basique et
x', y', x" et y" sont définis dans la revendication 1.

4. Composé de formule I selon l'une des revendications 1 à 3 dans lequel
R¹ représente l'hydrogène,
alkyle en C₁-C₂₄,
ricinolyle,
mono-, di- ou tri(alkyle en C₁-C₁₆)phényle ou mono-, di- ou tri(aryle en C₆-C₁₂)phényle,
et R², x', y', x" et y" sont définis ci-dessus.

5. Composé de formule I selon l'une des revendications 1 à 4 dans lequel x' est supérieur à 0, dans le cas où x" = 0.

6. Procédé pour la préparation d'un composé de formule I selon l'une des revendications 1 à 5, caractérisé en ce que l'on fait réagir le dihydrogénophosphate correspondant avec l'acide aminé ou son sel respectif.

7. Agent à base d'eau contenant au moins un composé selon l'une des revendications 1 à 5 et un solvant organique.

8. Utilisation d'un composé selon l'une des revendications 1 à 5 en tant qu'agent de surface.

9. Agent phytoprotecteur selon la revendication 7 contenant au moins un ingrédient actif pris parmi les herbicides, les insecticides, les fongicides, les acaricides, les nématicides, les phéromones et les répulsifs.
